# FASCICULE DE BREVET EUROPEEN

(11) **EP 3 488 302 B1**
(45) Date de publication et mention de la délivrance du brevet: **08.06.2022**
(21) Numéro de dépôt: 17751805.7
(22) Date de dépôt: 20.07.2017
(51) Int. Cl.: G05B 15/02, H04L 12/28

(54) **PROCÉDÉ DE GESTION D'INCIDENT D'UNE INSTALLATION DOMOTIQUE**
VERFAHREN ZUR STÖRUNGSVERWALTUNG EINER HEIMAUTOMATISIERUNGSAUSRÜSTUNG
METHOD FOR INCIDENT MANAGEMENT OF HOME AUTOMATION EQUIPMENT

(30) Priorité: 22.07.2016 FR 1656995
(43) Date de publication de la demande: 29.05.2019
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2017/051982
(87) Numéro de publication internationale: WO 2018/015671

(56) Documents cités:
- US-A1- 2009 113 538
- US-A1- 2010 262 467
- US-A1- 2014 156 081
- US-A1- 2015 054 947
- US-A1- 2015 106 061

## Description

### Domaine de l'invention

La présente invention concerne un procédé de gestion d'incident dans une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Par nature, une telle installation domotique est un environnement hétérogène. Lors d'un incident sur l'installation, correspondant par exemple à la constatation d'un défaut par l'utilisateur final ou un dysfonctionnement, il peut se révéler difficile pour un opérateur ou utilisateur de maintenance, notamment de maintenance à distance, d'identifier la source du défaut ou du dysfonctionnement entre les différents éléments composant l'installation.

Le document D1 (US2015/106061 A1), divulgue un procédé de surveillance d'équipements « propriétaires » d'une installation domotique, le procédé mettant en œuvre une unité centrale (cf. gateway 200) qui communique localement avec différents dispositifs domotiques (capteurs/moyens de restitution des informations captées) configurés pour recueillir des informations (visuelles, sonores, etc...,) relatives aux différents équipements « propriétaires » surveillés et restituer ces informations à un utilisateur déporté. Mais D1 ne divulgue pas comment superviser au travers d'un réseau étendu, les opérations de maintenance d'un dispositif domotique ou d'un ensemble de dispositifs domotiques.

Le document D2 (US 2010/262467 A1) divulgue un système pour installer et gérer automatiquement des équipements d'une installation domotique.

Le document D3 (US 2015/054947 A1) divulgue un système de sécurité intégré intégrant un accès distant et sécurisé aux équipements d'une installation domotique.

Mais D2 et D3 ne divulguent pas non plus comment superviser au travers d'un réseau étendu, les opérations de maintenance d'un dispositif domotique ou d'un ensemble de dispositifs domotiques.

La présente invention a pour but de résoudre tout ou partie des inconvénients mentionnés ci-dessus.

### Exposé de l'invention

A cet effet, la présente invention concerne un procédé selon la revendication 1 ou selon l'une des revendications dépendantes.

Grâce aux dispositions selon l'invention, la mise en place de la gestion d'incident est facilitée en permettant de procéder à des vérifications à distance par les utilisateurs de maintenance sur les unités centrales de commande et/ou les dispositifs domotiques.

Au sens de l'invention, un utilisateur de maintenance ou utilisateur de support est un utilisateur en charge de répondre aux appels ou aux requêtes des utilisateurs finaux, ces requêtes pouvant être ponctuelles ou sous la forme d'un abonnement de surveillance de l'installation, notamment au sein d'un centre d'appel. Il peut s'agir en particulier d'un utilisateur de maintenance de premier niveau.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un type de dispositifs domotiques correspond à une catégorie de dispositifs identiques, similaires ou partageant des caractéristiques et au moins une définition d'une variable d'état. A titre d'exemple, un type peut correspondre à un modèle particulier de volet roulant, d'alarme ou de portail.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet.

Une variable d'état peut également correspondre à une grandeur indicative du fonctionnement d'un dispositif domotique. A titre d'exemple, une telle variable d'état peut correspondre à :
- un indicateur de niveau de batterie ou de pile,
- un indicateur de mise en sécurité, par exemple pour un dispositif de type store de terrasse suite à une rafale de vent, ou encore
- un indicateur d'incident d'allumage, par exemple pour un dispositif domotique de type chaudière.

Les variables d'état peuvent comprendre également des valeurs de version de mise à jour logicielles et des indications sur le résultat des mises à jour.

Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique en vue de la réalisation d'une action par ce dispositif ou de l'obtention en retour d'une information, par exemple d'une information relative à une variable d'état de ce dispositif.

Selon un aspect de l'invention, l'au moins une information concernant la communication entre l'unité de gestion et le dispositif domotique ou l'unité centrale de commande concernée par la demande de diagnostic peut comprendre une indication d'un échec ou d'une absence de communication ou alternativement d'un succès ou d'une existence de ladite communication.

Selon un aspect de l'invention, l'au moins une information concernant la communication entre l'unité de gestion et le dispositif domotique ou l'unité centrale de commande concernée par la demande de diagnostic peut comprendre :
- une indication de la qualité de la transmission entre les éléments et/ou
- une indication des éventuels intervalles sans communication.

Selon un aspect de l'invention, l'au moins une valeur connue des variables d'état peut comprendre un ensemble des dernières valeurs connues des variables d'état pour les dispositifs domotiques et/ou pour les unités centrales de commande.

En particulier, cet ensemble peut comprendre à un historique des mises à jour des logiciels embarqués / indiquant si ces mises à jour se sont effectuées correctement.

Selon un aspect de l'invention, les résultats de commandes ou de tentatives de connexion à l'initiative de l'utilisateur final comprennent :
- Un historique des incidents de connexion ; par exemple des difficultés de connexion de l'utilisateur pouvant correspondre à des tentatives ratées d'entrée d'un login/mot de passe, et/ou
- Un historique des actions par l'utilisateur final UsrF, ou par un automatisme, avec un résultat d'exécution / Les derniers défauts constatés, et/ou
- Un historique des évènements sur l'unité de gestion.

Selon un aspect de l'invention, le rapport de diagnostic peut comprendre :
- Une analyse de l'historique et/ou
- Une proposition de procédure de résolution.

Selon un aspect de l'invention, le procédé comprend une étape de création d'un ticket d'incident, et le rapport de diagnostic est établi en lien avec le ticket d'incident lors de l'étape de fourniture d'un rapport de diagnostic à l'utilisateur de maintenance.

Selon un aspect de l'invention, le procédé comprend une étape préalable de réception d'une demande de gestion d'incident en provenance d'un utilisateur final de l'installation ou d'un utilisateur d'un centre de maintenance.

Selon un aspect de l'invention, le procédé comprend une étape de détermination d'un profil utilisateur correspondant à l'utilisateur final.

Selon un aspect de l'invention, le procédé comprend une étape de détermination d'une installation domotique et/ou d'une unité centrale ou d'au moins un dispositif domotique liés au profil utilisateur correspondant à l'utilisateur final.

Selon un aspect de l'invention, le procédé comprend une étape de vérification des droits d'accès d'un utilisateur de maintenance sur l'installation, l'unité centrale ou le dispositif.

Selon un aspect de l'invention, le procédé comprend une étape d'envoi d'une demande d'autorisation de droit d'accès temporaires à l'installation, à l'unité centrale de commande ou au dispositif domotique à l'utilisateur final au profit de l'unité de gestion ou de l'utilisateur de maintenance, et une étape de réception d'une réponse à la demande d'autorisation de droit d'accès.

Selon un aspect de l'invention, le procédé comprend en outre la réalisation d'une étape de diagnostic local sur l'unité de gestion.

Selon un aspect de l'invention, l'étape de fourniture d'un rapport de diagnostic comprend la réalisation d'une combinaison entre un résultat de l'étape de diagnostic local et le résultat de diagnostic en provenance de l'unité centrale de commande.

Selon un aspect de l'invention, le procédé comprend une étape d'envoi d'un message d'escalade à un utilisateur de maintenance expert.

Selon un aspect de l'invention, le procédé comprend :
- une étape de réception d'une demande de commande concernant au moins une unité centrale de commande appartenant à l'installation domotique ou au moins un dispositif domotique appartenant à l'installation domotique ;
- une étape de test local sur la base des informations disponibles au niveau de l'unité de gestion ;
- Une étape d'envoi d'au moins un message de requête de commande à l'au moins une unité centrale de commande concernée par la demande de commande ou à l'au moins une unité centrale de commande à laquelle est rattachée l'au moins un dispositif domotique concerné par la demande de commande ;
- Une étape de réception d'un résultat de commande en provenance d'une unité centrale de commande ;
- Une étape de fourniture d'un rapport de commande, en lien avec le ticket d'incident à l'utilisateur de maintenance établi sur la base de l'au moins un résultat de commande.

Selon un aspect de l'invention, le procédé comprend en outre la réalisation d'une étape de commande locale sur l'unité de gestion.

Selon un aspect de l'invention, la commande correspond à la mise à jour d'un logiciel embarqué sur le dispositif domotique ou l'unité centrale de commande concernée par la demande de commande.

Selon un aspect de l'invention, le procédé comprend :
- une étape de détermination d'un système tiers associé à la gestion d'incident d'une unité centrale de commande ou d'un dispositif domotique concerné par la demande de gestion d'incident ;
- une étape d'envoi d'une requête d'ouverture d'un ticket tiers par ledit système tiers ;

Au sens de la présente invention, un système tiers correspond à un système de gestion d'incident appartenant à des fabricants ou à des sociétés assurant la maintenance de dispositifs domotiques ou d'unité centrales de commande. L'interaction entre l'unité de gestion et un système tiers permet de déléguer tout ou partie de la gestion d'un incident relatif à un dispositif domotique ou à une unité centrale de commande audit système tiers, dans le cas notamment ou il s'agit d'un dispositif ou d'une unité qui est commercialisée ou maintenu par la société en charge du système tiers.

Selon un aspect de l'invention, le procédé comprend :
- Une étape de réception d'un retour concernant le ticket tiers.

Selon un aspect de l'invention, le procédé comprend au moins une étape de réception d'un statut intermédiaire relatif au ticket tiers en provenance du système tiers.

Selon un aspect de l'invention, la fermeture du ticket peut intervenir si le retour concernant le ticket tiers indique une résolution.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur ;
Les figures 3 à 5 sont des schémas illustrant un mode de mise en œuvre d'un procédé de gestion d'incident d'une installation domotique selon l'invention.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

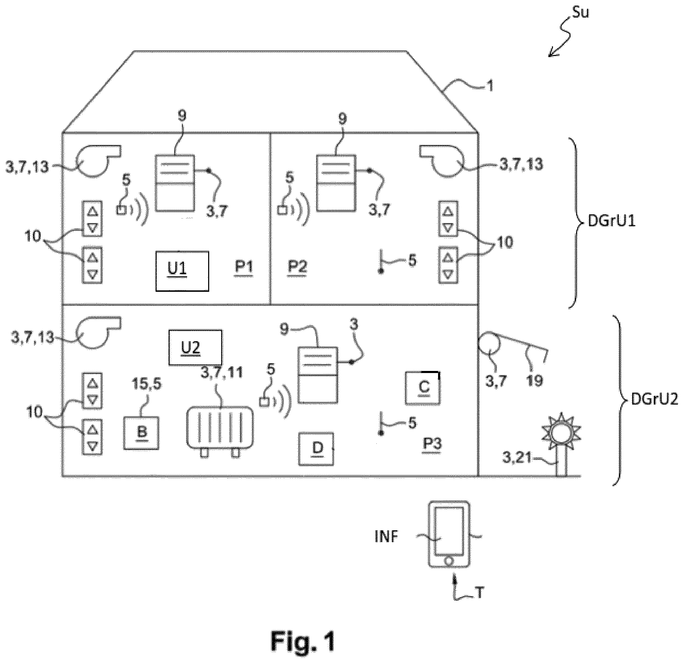

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

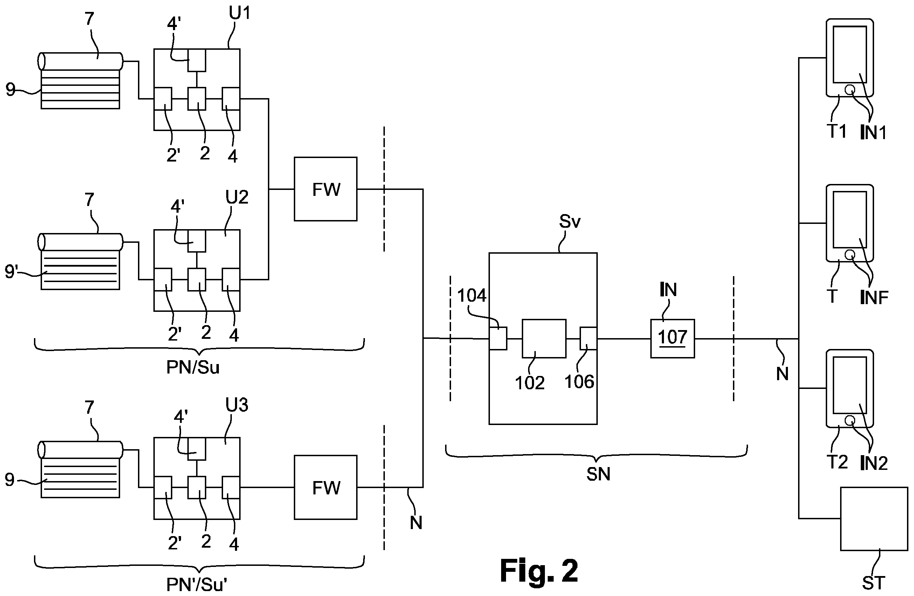

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Dans le cas ou l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon un deuxième protocole de communication cible P2, avec un terminal de communication mobile T. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemple incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle INF permettant à un utilisateur final de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle INF comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

### Identifiant unique d'un dispositif domotique

Le serveur Sv et les unités centrales de commandes U peut utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemId si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :
protocol : identifiant du protocole local de dispositif natif;
gatewayId : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemId : ce champ optionnel indique une identification, par exemple un rang du sous-système (démarrant par exemple à 1), si un tel sous-système est présent.

### Exemples

1) knx://0201-0001-1234/1.1.3
   Cet identifiant unique DURL correspond à un dispositif D communiquant par le protocole KNX avec une adresse individuelle 1.1.3 accessible par l'unité centrale de commande U portant l'identifiant #0201-0001-1234.
2) io://0201-0001-1234/145036#2
   Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Utilisateurs de maintenance et Utilisateurs de maintenance experts

Comme cela est représenté sur la figure 2, le serveur Sv peut communiquer avec des terminaux en possession d'utilisateurs qui ne sont pas le ou les utilisateurs finaux de l'installation Su.

En particulier, le serveur Sv peut interagir avec au moins un premier utilisateur USAV possédant un profil utilisateur d'un premier type USAVT1. Le premier type d'utilisateur USAV correspond à un opérateur ou utilisateur de maintenance à distance, notamment d'un utilisateur de maintenance de premier niveau en charge de répondre aux appels ou aux requête des utilisateurs finaux UsrF.

A cet effet, une interface IN1 est mise à disposition par le serveur Sv. L'accès à cette interface peut être réalisée par une application exécutée sur un terminal utilisateur T1 du premier utilisateur USAV, ou par un accès par un client léger.

Le serveur Sv peut également interagir avec au moins un deuxième utilisateur USAVex possédant un profil utilisateur d'un deuxième type USAVex T2. Le deuxième type d'utilisateur USAVex correspond notamment à un utilisateur de maintenance expert ou de deuxième niveau qui possède par exemple des compétences techniques supérieures à celle d'un utilisateur de maintenance USAV de premier niveau.

A cet effet, une interface IN2 est mise à disposition par le serveur Sv. L'accès à cette interface peut être réalisée par une application exécutée sur un terminal utilisateur T2 du deuxième utilisateur, ou par un accès par un client léger.

### Systèmes tiers

Comme cela est visible sur la figure 2, le serveur Sv peut interagir avec des systèmes tiers ST. En particulier, il est possible d'envisager que les systèmes tiers correspondent à des systèmes de gestion d'incident appartenant à des fabricants ou à des sociétés assurant la maintenance de dispositifs domotiques ou d'unité centrales de commande. L'interaction entre le serveur Sv et un système tiers permet de déléguer tout ou partie de la gestion d'un incident relatif à un dispositif domotique ou à une unité centrale de commande audit système tiers, dans le cas notamment ou il s'agit d'un dispositif ou d'une unité qui est commercialisé ou maintenu par la société en charge du système tiers.

### Procédé de gestion d'incident

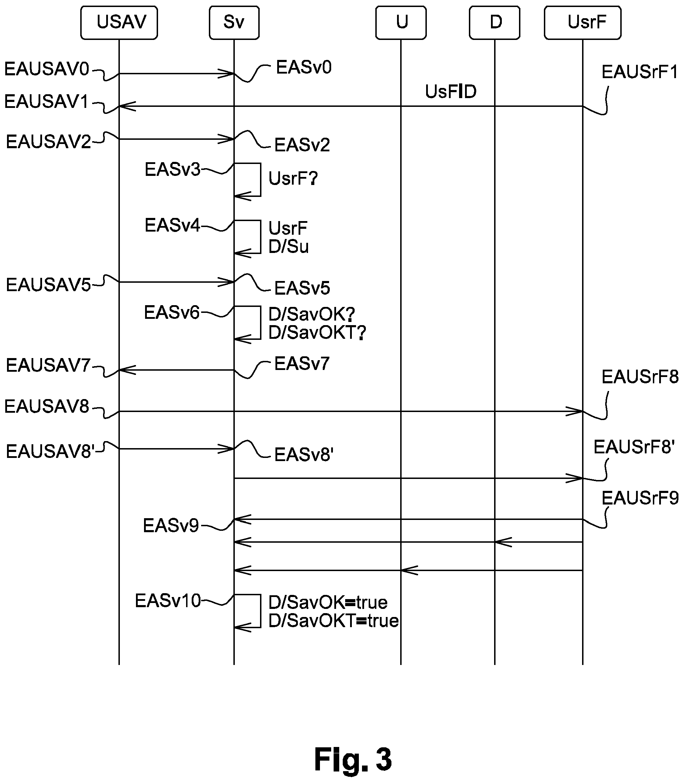

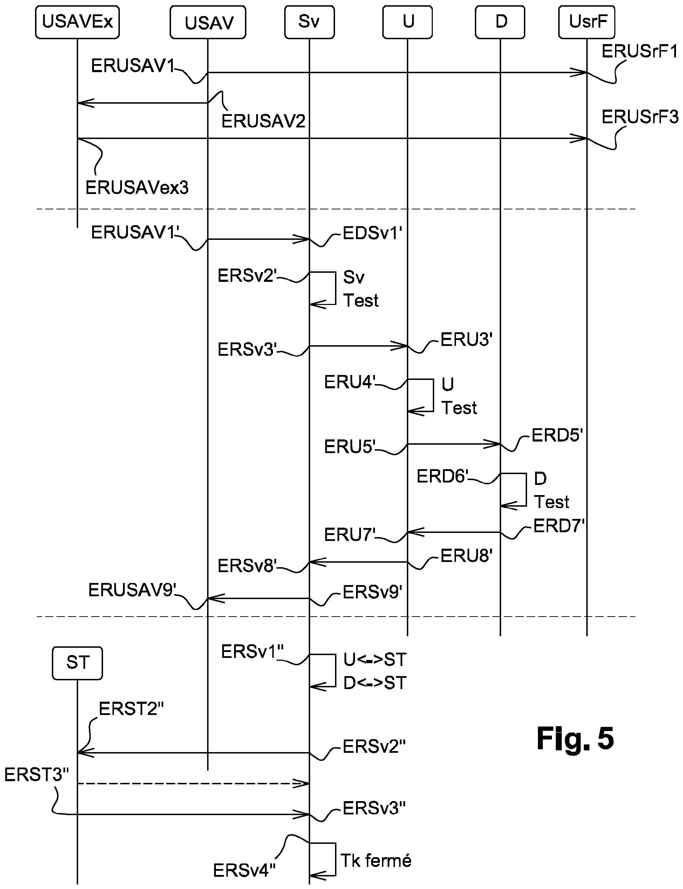

Nous allons à présent décrire un mode de mise en œuvre d'un procédé de gestion d'incident en référence aux figures 3 à 5, ces figures correspondant à trois phases du procédé.

### Création du ticket et autorisation temporaire d'accès pour la maintenance

Dans une étape préalable EAUSAV0 / EASv0 un compte d'utilisateur de maintenance est crée par l'utilisateur USAV auprès de l'unité de gestion Sv.

Dans une étape EAUsrF1, un utilisateur final UsrF place un appel correspondant à une requête de gestion d'incident auprès d'un centre d'appel, l'appel étant pris en charge par un utilisateur de maintenance à distance USAV disposant d'un terminal T1 d'accès à l'unité de gestion Sv.

Alternativement, la requête de gestion d'incident peut être communiquée par Email / Chat / Message d'interface sur l'unité centrale de commande U (ex. : Tahoma) ou encore par une application Smartphone.

Un identifiant d'utilisateur final UsrFID doit être communiqué.

Dans une étape EASv2, l'unité de gestion est notifiée de cet appel, automatiquement ou de façon sollicitée par l'utilisateur de maintenance (dans une étape EAUSAV2). La création d'un ticket Tk peut être réalisée à ce stade, en lien avec identifiant d'utilisateur final UsrFID.

Dans une étape EASv3, l'unité de gestion procède à au moins une vérification d'existence d'un compte pour l'utilisateur final.

Dans une étape EASv4, l'unité de gestion détermine l'installation Su et/ou la liste de dispositif domotiques D associés au profil de l'utilisateur final UsrF.

Dans une étape EASv5, l'unité de gestion reçoit une requête d'information provenant de l'utilisateur USAV pour obtenir des informations. Alternativement, l'unité de gestion peut considérer cette requête implicite du moment qu'une requête de gestion d'incident a été initiée.

Dans une étape EASv6, l'unité de gestion vérifie si un accès est autorisé pour l'utilisateur de maintenance USAV sur D en vérifiant notamment si un « flag » SAVOK correspondant possède une valeur booléenne « vraie » et/ou si la plage de validité de l'autorisation SAVOKT est toujours valable pour une installation Su, une unité centrale de commande U ou un dispositif D.

Si le résultat du test est négatif, une réponse de refus d'accès est donnée à l'utilisateur de maintenance USAV dans une étape EASv7.

Nous supposerons dans le cas décrit sur la figure 3 que la réponse est négative.

Dans ce cas, l'utilisateur de maintenance USAV peut demander :
- directement par téléphone à l'utilisateur ou par un autre moyen (Chat,..) de lui accorder l'accès au système dans une étape USAV8.
- ou indirectement par l'intermédiaire de l'unité de gestion dans une étape USAV8'

En réponse, l'utilisateur final UsrF donne son autorisation au serveur par une interface utilisateur de l'unité centrale de commande U, de l'application de chat ou un élément d'un dispositif comme cela est figuré par l'étape EAUSrF9.

A réception de cette autorisation, l'unité de gestion Sv peut mettre à jour le Flag SAVOK ou la période de validité SAVOKT dans une étape EASv10.

Ainsi, un droit temporaire sur une installation Su, une unité centrale U ou un dispositif D est accordé à l'utilisateur de maintenance USAV pour réaliser des consultations et/ou un test comme cela sera décrit ultérieurement.

En pratique, les droits accordés permettent de consulter les éléments suivants sur un dispositif :
- Son adresse ;
- La liste des dispositifs d'une installation Su ;
- Les valeurs des variables d'état des dispositifs domotiques D ;
- Les résultats des diagnostics
- La possibilité de réaliser des fonctions de test

Les droits de l'utilisateur de maintenance USAV sont plus limités que celui de l'utilisateur final USrF.

### Test / Diagnostic

Dans une première étape EDUSAV1, l'utilisateur de maintenance USAV demande une consultation de l'installation, d'une unité centrale de commande ou d'un dispositif domotique D pour lequel il dispose d'une autorisation temporaire.

Cette demande est reçue par l'unité de gestion Sv dans une étape EDSv1.

Cette partie du procédé est mise en œuvre sur la base d'une architecture comprenant une ensemble d'éléments communicants, à savoir : l'unité de gestion Sv, les unités centrales de commande U, les dispositifs domotiques D qui forment différents niveaux. Lors d'une consultation d'un utilisateur relative à un dispositif D, une chaîne de communication doit être établi à travers ces différents niveaux jusqu'à atteindre le dispositif D.

A chaque niveau, le diagnostic peut comprendre une première étape de vérification de la communication entre l'élément courant et l'élément suivant de la chaîne. L'architecture décrite peut comprendre trois niveaux : un niveau correspondant à l'unité de gestion Sv, un niveau correspondant à une unité centrale de commande U, et un niveau correspondant à un dispositif domotique D. Il est bien entendu possible que des niveaux intermédiaires interviennent, par exemple dans le cadre d'une communication de type Mesh, par exemple en raison d'une communication par une unité de gestion intermédiaire. Il est également possible que l'unité centrale de commande soit intégrée dans un dispositif domotique, ce qui peut diminuer le nombre de niveaux de communication en réseau.

Dans le cas où la communication est possible un diagnostic à distance ou « actif » est réalisé. Dans le cas contraire, un diagnostic « passif » sur la base des informations stockées éventuellement dans l'élément courant est réalisé.

Nous allons décrire les différentes étapes de diagnostics au niveau des différents niveaux de l'architecture comprenant les installations domotiques Su et l'unité de gestion Sv.

L'unité de gestion lance une première étape de diagnostic EDSv2 sur la base des informations disponibles à son niveau. Par exemple : Quel est l'état de la connexion réseau vers l'installation comprenant le dispositif domotique concerné par la demande de consultation, et notamment vers l'unité centrale de commande à laquelle est rattachée le dispositif D ? Dispose-t'on d'un dernier état stocké sur l'unité de gestion.

Dans le cas où la connexion réseau ou la communication est possible vers l'unité centrale de commande U à laquelle est rattaché le dispositif D, 'unité de gestion Sv peut également envoyer, dans une étape EDSv3 un message de demande de diagnostic à destination d'une unité centrale de commande U, que l'unité centrale de commande reçoit dans une étape EDU3.

L'unité centrale de commande U lance une étape de diagnostic EDU4 sur la base des informations disponibles à son niveau. Par exemple : Quel est l'état de la connexion réseau vers les dispositifs ? Dispose-t'on d'un dernier état stocké sur l'unité centrale de commande.

Selon une première possibilité, l'unité centrale de commande U possède une fonction ou procédure de diagnostic automatique. Dans ce cas, l'envoi du message de diagnostic par l'unité de gestion Sv correspond à un appel à ladite fonction ou procédure.

La fonction ou procédure peut ainsi renvoyer des codes et/ou messages d'erreur, ou encore générer un rapport de diagnostic propre à l'unité centrale de commande qui est consultable à distance par l'unité de gestion ou communiqué à celle-ci.

L'unité centrale de commande peut par exemple déterminer :
- si ses paramètres systèmes sont corrects (taux d'utilisation de la mémoire, du processeur, ...) ;
- si un des processus logiciel qu'elle exécute s'est arrêté de manière inattendue ;
- si son horloge est bien synchronisée avec un serveur de gestion du temps.
- dans le cas ou elle supporte plusieurs canaux de communication avec le serveur, si tous ces canaux fonctionnent (ex: GSM).

L'unité centrale de commande peut également ou alternativement posséder des variables d'états utiles au diagnostic qui sont consultables à distance par l'unité de gestion ou qui sont communiquées automatiquement à l'unité de gestion de façon périodique.

Selon une deuxième possibilité, par exemple dans le cas ou l'unité centrale de commande ne possède ni fonction ni de variable d'état pour le diagnostic, l'unité de gestion réaliser la procédure de diagnostic en utilisant les fonctions disponibles sur l'unité centrale de commande U.

L'unité de gestion est donc configurée pour stocker la description de la procédure à effectuer.

Une procédure de diagnostic est typiquement constituée d'un ensemble de commandes à effectuer dans un ordre prédéterminé, mais peut aussi être exprimée sous la forme d'un script pour un langage de commande supporté par l'unité qui va exécuter cette procédure.

Les erreurs éventuellement rencontrées pendant la réalisation de la procédure de test serviront de base au rapport de diagnostic.

L'unité centrale de commande Sv peut également envoyer, dans une étape EDU5 un message de demande de diagnostic à destination d'un dispositif D, que le dispositif D reçoit dans une étape EDD5.

Le dispositif domotique D lance une étape de diagnostic EDD6 sur la base des informations disponibles à son niveau. Par exemple : Quel sont les valeurs des variables du dispositif ? Le dispositif est-il dans un état de Protection thermique ?

Selon une première possibilité, le dispositif domotique D possède une fonction ou procédure de diagnostic automatique. Dans ce cas, l'envoi du message de diagnostic par l'unité de commande U correspond à un appel à ladite fonction ou procédure.

La fonction ou procédure peut ainsi renvoyer des codes et/ou messages d'erreur, ou encore générer un rapport de diagnostic propre au dispositif domotique qui est consultable à distance par l'unité centrale de commande U ou communiqué à celle-ci.

A titre d'exemple, L'unité centrale de commande U peut demander à un dispositif domotique D de type système de chauffage de s'auto-diagnostiquer si celui ci supporte cette fonction. Le système de chauffage pourra alors contrôler les valeurs de ses capteurs de température internes et identifier d'éventuels défauts.

Le dispositif domotique D peut également ou alternativement posséder des variables d'états utiles au diagnostic qui sont consultables à distance par l'unité centrale de commande U ou qui sont communiquées automatiquement à l'unité centrale de commande de façon périodique.

A titre d'exemple:
- un dispositif domotique de type capteur peut présenter une variable d'état de type "pile faible" ;
- un dispositif domotique de type store de terrasse peut présenter une variable d'état de type « mise en sécurité suite à des rafales de vent » ;
- un dispositif domotique de type chaudière peut présenter une variable d'état de type « ratées d'allumage constatées » ;

Le diagnostic peut s'effectuer du point de vue de l'unité centrale de commande de manière active en demandant une lecture de ces états ou de manière passive en consultant les dernières valeurs reçues.

Selon une deuxième possibilité, par exemple dans le cas ou le dispositif domotique ne possède ni fonction ni de variable d'état pour le diagnostic, l'unité centrale de commande réalise la procédure de diagnostic en utilisant les fonctions disponibles sur le dispositif domotique D.

L'unité centrale de commande U est donc configurée pour stocker la description de la procédure à effectuer, cette description pouvant être obtenue de l'unité de gestion dans une étape préalable.

Une procédure de diagnostic est typiquement constituée d'un ensemble de commandes à effectuer dans un ordre prédéterminé, mais peut aussi être exprimée sous la forme d'un script pour un langage de commande supporté par l'unité qui va exécuter cette procédure.

A titre d'exemple, l'unité de gestion peut envoyer dans le cadre de l'étape EDSv3 une demande à l'unité centrale de commande de lancer une commande C1 sur un dispositif domotique D1 et une commande C2 sur un dispositif domotique D2. L'unité centrale de commande lance la commande C1 sur le dispositif domotique P1 et remonte le résultat au serveur, puis lance la commande C2 sur le dispositif domotique P2 et remonte le résultat au serveur.

Les erreurs éventuellement rencontrées pendant la réalisation de la procédure de test serviront de base au rapport de diagnostic.

A titre d'exemple, les erreurs suivantes peuvent être détectées :
- Une commande refusée car le dispositif domotique D ne répond pas ou se trouve hors de portée radio ;
- Une commande refusée car la clef de cryptage n'est plus la bonne ; le dispositif a perdu la clef ou a été réinitialisé ;
- Pour un dispositif domotique de type volet roulant : le dispositif refuse la commande de pilotage en indiquant une protection thermique ;
- Pour un dispositif domotique de type volet portail : le dispositif refuse la commande de pilotage en indiquant la détection d'un obstacle.

Le dispositif domotique D renvoie ces informations de diagnostic dans une étape EDD7. L'étape EDD7 peut donc correspondre notamment correspondre à un retour de fonction de diagnostic, soit à un retour de commande, soit à une notification ou à une consultation d'une ou de plusieurs valeurs de variable d'état.

L'unité centrale de commande reçoit ces informations dans une étape EDU7. L'unité centrale de commande peut consolider les informations en provenance de différents dispositifs domotiques qui lui sont associés, ainsi que les informations collectées lors du diagnostic opéré lors de l'étape EDU4, puis transmettre ces informations à l'unité de gestion Sv dans une étape EDU8.

L'unité de gestion reçoit ces informations dans une étape EDSv8. L'unité de gestion peut consolider les informations en provenance de différentes unités centrales de commande associées à une installation, ainsi que les informations collectées lors du diagnostic opéré lors de l'étape EDSv2, puis établir un rapport de diagnostic transmis à l'utilisateur de maintenance USAV dans une étape EDSv9.

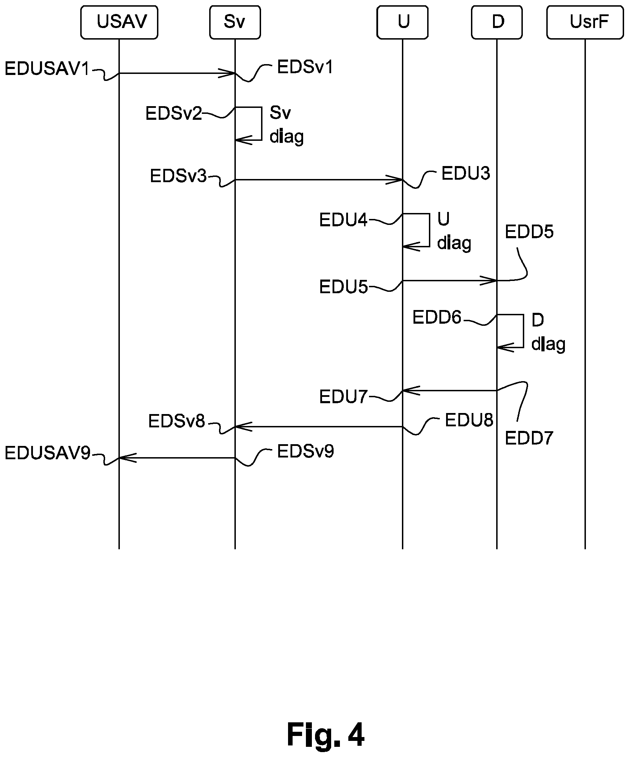

Les étapes décrites sur la figure 4 correspondent à un cas de figure dans lequel la communication est possible de l'unité de gestion Sv à l'unité centrale de commande U, et dans lequel des messages de diagnostic sont envoyés depuis l'unité de gestion vers l'unité centrale de commande U et de l'unité centrale de commande U vers le ou les dispositifs domotiques D.

Dans le cas où la communication entre l'unité de gestion Sv et l'unité centrale de commande U n'est pas possible, notamment Si l'unité centrale de commande U ne répond plus ou n'est plus joignable, le diagnostic peut alors être basé sur les derniers états connus ou les historiques stockés au niveau de l'unité de gestion Sv au cours de l'étape EDSv2. Dans ce cas, les étapes EDSv3, EDSv8 et les étapes intermédiaires sur l'unité centrale de commande U et le dispositif domotique D ne sont pas réalisées.

De la même façon, si la communication entre l'unité centrale de commande U et un dispositif domotique n'est pas possible, notamment si le dispositif domotique U ne répond plus ou n'est plus joignable, le diagnostic peut alors être basé sur les derniers états connus ou les historiques stockés au niveau de l'unité centrale de commande Sv au cours de l'étape EDU4. Dans ce cas, les étapes EDU5, EDU7 et les étapes intermédiaires sur le dispositif domotique D ne sont pas réalisées.

A titre d'exemples, les éléments de diagnostic suivants peuvent être déterminés au niveau de l'unité de gestion ou de l'unité centrale de commande sur la base des données stockées à leur niveau :
a- un dispositif domotique de type capteur et communicant par radiofréquence n'émet plus pendant une période de temps déterminée, par exemple de quelques heures. L'unité centrale de commande détermine que la situation n'est pas normale et remonte un état d'erreur sur ce dispositif à l'unité de gestion Sv.
b- L'unité de gestion peut mettre en œuvre à son niveau une détermination d'un parcours des historiques de commandes. Ainsi, l'unité de gestion peut stocker l'ensemble des commandes lancées avec un horodatage et leur résultat, en particulier avec les codes d'erreur éventuels). Il est ensuite possible de parcourir l'historique des commandes récentes pour constater le taux d'erreur ou l'apparition des certains codes d'erreurs caractéristiques.
c - L'unité de gestion peut mettre en œuvre à son niveau une détermination d'un parcours des historiques des valeurs de variables d'états : l'unité de gestion peut stocker l'ensemble des valeurs prisent par certaines variables états des dispositifs domotiques ou des unités centrales de commande avec horodatage. Il est ensuite possible de parcourir l'historique des états des dispositifs domotiques à la recherche de valeurs indiquant un problème. Une valeur de variable d'état peut correspondre à la qualité du signal radio (RSSI = Received Signal Strength Indication) : si cette valeur est trop basse ou fluctue au cours du temps, il est possible de diagnostiquer un problème de portée ou de brouillage radio.

### Rapport de diagnostic

Le rapport de diagnostic peut notamment comprendre les informations suivantes :
- des informations sur la communication avec l'unité centrale de commande, et la connectivité entre l'unité de gestion et l'unité centrale de commande, ou entre l'unité centrale de commande et chaque dispositif concerné, et notamment l'existence d'une connexion ou son absence ; Ces informations peuvent également comprendre :
   ∘ La qualité de la transmission entre les éléments ;
   ∘ Les intervalles sans communication ;
- Dans la mesure où la communication est possible, le rapport peut comprendre également :
   ∘ Les derniers états connus et les dernières valeurs connues des variables d'état pour les dispositifs domotiques et pour les unités centrales de commande ;
   ∘ Un historique des incidents IO ; à titre d'exemple, les difficultés de logging de l'utilisateur peuvent être reportées, en indiquant par exemple les tentatives ratées d'entrée d'un login /mot de passe ;
   ∘ Un historique des mises à jour des logiciels embarqués / indiquant si ces mises à jour se sont effectuées correctement ;
   ∘ Un historique des actions par l'utilisateur final UsrF, ou par un automatisme, avec un résultat d'exécution / Les derniers défauts constatés ;

Le rapport peut également comprendre :
- Une analyse de l'historique, et/ou
- Une proposition de procédure de résolution.

L'analyse de l'historique et les propositions de procédure de résolution peuvent utiliser des critères différents en fonction de la nature de l'historique considéré.

Selon une première possibilité, dans le cas d'une analyse de l'historique des incidents de connexion, celle-ci est effectuée sur la base des codes erreurs stockés lors des tentatives d'accès infructueuses, parmi les types suivants :
- mot de passe invalide ;
- mot de passe bloqué suite à de trop nombreux essais ;
- adresse réseau distante bloquée suite à de trop nombreux essais ;
- adresse(s) réseau à l'origine de ces tentatives.

La nature du blocage peut ainsi être déterminée, en particulier parmi les possibilités suivantes : mot de passe invalide, mot de passe bloqué par l'utilisateur lui-même ou par des tentatives d'accès frauduleuses.

Les procédures de résolution possibles consistent à débloquer le mot de passe et/ou l'adresse réseau distante, ou proposer à l'utilisateur d'effectuer un changement du mot de passe par une procédure de récupération utilisant un plusieurs mécanismes en particulier parmi les possibilités suivantes: envoi d'une demande de validation par un autre media (email, sms, ...), demande de réponse à une question secrète.

Selon une deuxième possibilité, dans le cas d'une analyse de l'historique des actions par l'utilisateur final UsrF, ou par un automatisme, avec un résultat d'exécution, celle-ci est effectuée sur la base des codes d'erreurs stockés dans les résultats d'exécution.

En fonction du code d'erreur rencontré, une procédure de résolution peut être déterminée notamment par une des méthodes suivantes :
- Si le code d'erreur est explicite (c.à.d. qu'il indique de manière directe la nature du problème), une procédure de résolution peut être déterminée de manière unique dans une base de connaissances locale à l'unité de gestion à partir du code de l'erreur. Les exemples typiques de ce cas de figure concernent les erreurs de type pile faible, clef de sécurité invalide, blocage obstacle.
- Si le code d'erreur est générique (c.à.d. qu'il indique une catégorie de problème sans en préciser la nature exacte), une ou plusieurs procédures de résolution peuvent être déterminées en utilisant une base de connaissances locale à l'unité de gestion à partir du code de l'erreur, du type de dispositif domotique et des éléments suivants, s'ils sont disponibles :
   ∘ le numéro de série du dispositif domotique
   ∘ la version materielle et ou logicielle du dispositif domotique
   ∘ la date de fabrication du dispositif domotique

Les exemples typiques de cas de figure concernent des erreurs de type inattendu sur un volet roulant d'un type particulier et d'une certaine année de production.

Les procédures de résolution possibles sont multiples : réglage physique du dispositif domotique par un technicien si nécessaire, mise à jour du logiciel du dispositif domotique lorsque c'est possible, remplacement du dispositif domotique si la série est connue comme défectueuse, ...
- Si le code d'erreur indique une absence de communication avec le dispositif domotique, une procédure de résolution peut être proposée, incluant notamment :
   ∘ une verification des batteries, pour les dispositifs domotiques fonctionnant sur batterie autonome ;
   ∘ une verification de la portée pour les dispositifs domotiques utilisant un protocole de communication radiofréquence
   ∘ une verification du cablage pour les dispositifs domotiques utilisant un protocole de communication filaire ;

Un exemple d'une telle erreur peut être une erreur indiquant une absence de communication avec le dispositif domotique depuis plus de 4 heures.

Une analyse statistique des occurrences d'erreur par dispositif domotique, effectuée sur un horizon plus grand, peut aussi permettre de déterminer si un dispositif domotique présente des défauts récurrents dans le temps, et proposer un éventuel remplacement du dispositif domotique.

Selon une troisième possibilité, dans le cas d'une analyse de l'historique des évènements sur l'unité de gestion, celle-ci est effectuée sur la base des codes d'évenements recus.

Ces événements peuvent être relatifs à :
- des incidents détectés au niveau de l'unité centrale de commande U. A titre d'exemple, un tel incident peut correspondre à la détection d'un brouillage radio ;
- des incidents remontés de facon évènementielle par les dispositifs domotiques. A titre d'exemple, un tel incident peut correspondre à un défaut de type « pile ou batterie faible » ou à une détection de rafales de vents excessives par un capteur de vent.

### Résolution / Maintenance

### Résolution manuelle par l'utilisateur

Sur la base du Rapport de diagnostic, selon une première possibilité, une proposition de procédure de résolution peut passer par une action de l'utilisateur final.

Dans ce cas, dans une étape ERUSAV1, l'utilisateur de maintenance demande à l'utilisateur de procéder à une action corrective.

Alternativement, la proposition peut consister en une procédure d'escalade, dans une étape ERUSAV2, vers un utilisateur de maintenance expert USAVex qui lui-même peut guider l'utilisateur final, dans une étape ERUSAVex3.

### Tests complémentaires / commande de mise à jour

Sur la base du Rapport de diagnostic, selon une deuxième possibilité, Une action technique de test ou encore une commande de mise à jour forcée peut être recommandée.

Ainsi, dans une première étape ERUSAV1', l'utilisateur de maintenance USAV demande une consultation de l'installation, d'une unité centrale de commande ou d'un dispositif domotique D pour lequel il dispose d'une autorisation temporaire.

### Cette demande est reçue par l'unité de gestion Sv dans une étape ERSv1'.

L'unité de gestion lance une première étape de test ER'Sv2 sur la base des informations disponibles à son niveau. Par exemple : Est-ce que les mises à jour logiciel les plus récentes on été effectuées.

L'unité de gestion Sv peut également envoyer, dans une étape ERSv3' un message de demande d'action technique de test ou une commande à destination d'une unité centrale de commande U, que l'unité centrale de commande reçoit dans une étape ERU3'.

L'unité centrale de commande U lance une étape de test ERU4' sur la base des informations disponibles à son niveau ou de commande. Par exemple : La dernière mise à jour a-t'elle été installée ? Si non, téléchargement et installation de la mise à jour.

L'unité centrale de commande Sv peut également envoyer, dans une étape ERU5' un message de demande de test ou un ordre de commande à destination d'un dispositif D, que le dispositif D reçoit dans une étape ERD5'.

Le dispositif domotique U lance une étape de diagnostic ERD6' sur la base des informations disponibles à son niveau. Par exemple : Par exemple : La dernière mise à jour a-t'elle été installée ? Si non, téléchargement et installation de la mise à jour.

Le dispositif domotique U renvoie ces informations de test ou le résulta de la commande dans une étape ERD7'.

L'unité centrale de commande reçoit ces informations dans une étape ERU7'. L'unité centrale de commande peut consolider les informations en provenance de différents dispositifs domotiques qui lui sont associés, ainsi que les informations collectées lors du test ou de la commande opéré lors de l'étape ERU4', puis transmettre ces informations à l'unité de gestion Sv dans une étape ERU8'.

L'unité de gestion reçoit ces informations dans une étape ERSv8.' L'unité de gestion peut consolider les informations en provenance de différentes unités centrales de commande associées à une installation, ainsi que les informations collectées lors du test ou de la commande opéré lors de l'étape ERSv2', puis établir un rapport de test ou de commande transmis à l'utilisateur de maintenance USAV dans une étape ERSv9'.

### Résolution par un système tiers

Selon une troisième possibilité, sur la base du rapport de diagnostic ou des tests supplémentaires, il est possible qu'un problème soit détecté sur une unité centrale de commande U ou un dispositif domotique D.

Dans ce cas, dans une étape ERSv1", le serveur détermine le système tiers responsable de l'unité centrale de commande ou du dispositif défectueux (il peut s'agir de l'unité de gestion Sv).

Dans une étape ERST2", un ticket TKST est ouvert sur le système tiers ST, sur requête de l'unité de gestion Sv.

Des statuts intermédiaires peuvent être reçus du système tiers ST.

Le retour du ticket est reçu dans une étape ERSv3", la fermeture du ticket TK pouvant intervenir si le ticket TKST indique une résolution dans une étape Ersv4".

Des statistiques sur la provenance des erreurs par partenaire peuvent être conservées.

Toutes les opérations sont historisées dans le ticket TK pour permettre la reprise par une autre personne.

## Revendications

1. Procédé de gestion d'incident dans au moins une installation domotique comprenant au moins un dispositif domotique (D) et au moins une unité centrale de commande (U), le procédé étant mis en œuvre par une unité de gestion (Sv) connectée à distance à l'au moins une installation domotique par l'intermédiaire d'un réseau étendu, et comprenant les étapes suivantes :
- Une étape (EDSv1) de réception d'une demande de diagnostic concernant l'au moins une unité centrale de commande (U) appartenant à l'au moins une installation domotique (Su) ou l'au moins un dispositif domotique appartenant à l'au moins une installation domotique (Su) ;
- Une étape (EDSv3) d'envoi d'au moins un message de requête de diagnostic à l'au moins une unité centrale de commande (U) concernée par la demande de diagnostic ou à l'au moins une unité centrale de commande (U) à laquelle est rattachée l'au moins un dispositif domotique concerné par la demande de diagnostic ;
- Une étape (EDSv8) de réception d'un résultat de diagnostic en provenance de l'au moins une unité centrale de commande (U) ;
- Une étape (EDSv9) de fourniture d'un rapport de diagnostic à un utilisateur de maintenance (USAV) en charge de répondre à au moins une requête d'un utilisateur final, le rapport de diagnostic étant établi sur la base de l'au moins un résultat de diagnostic ;
L'au moins un résultat de diagnostic comprenant :
- au moins une information concernant la communication entre l'unité de gestion et l'au moins un dispositif domotique ou l'au moins une unité centrale de commande concernée par la demande de diagnostic, et
- dans la mesure où l'au moins un dispositif domotique ou l'au moins une unité centrale de commande peut communiquer un tel résultat :
∘ au moins une valeur connue d'au moins une variable d'état de l'au moins un dispositif domotique (D) et/ou de l'au moins une unité centrale de commande (U) ; et/ou
∘ au moins un résultat de commande ou de tentative de connexion à l'initiative de l'utilisateur final (UsrF).

2. Procédé selon la revendication 1, comprenant une étape préalable de réception (EASv2) d'une demande de gestion d'incident en provenance de l'utilisateur final (UsrF) de l'installation (Su) ou de l'utilisateur de maintenance (USAV).

3. Procédé selon l'une des revendications 1 ou 2, comprenant une étape (EASv3) de détermination d'un profil utilisateur correspondant à l'utilisateur final (UsrF).

4. Procédé selon l'une des revendications 1 à 3, comprenant une étape (EAsv4) de détermination de l'installation domotique (Su) et/ou de l'au moins une unité centrale (U) ou de l'au moins un dispositif domotique (U) liés au profil utilisateur correspondant à l'utilisateur final (UsrF).

5. Procédé selon l'une des revendications 1 à 4, comprenant une étape (EASv6) de vérification des droits d'accès de l'utilisateur de maintenance (USAV) sur l'au moins une installation (Su), l'au moins une unité centrale (U) ou l'au moins un dispositif domotique (D).

6. Procédé selon l'une des revendications 1 à 5, comprenant une étape (EASv8) d'envoi d'une demande d'autorisation de droit d'accès temporaires à l'au moins une installation (Su), à l'au moins une unité centrale de commande (U) ou à l'au moins un dispositif domotique (D) à l'utilisateur final (UsrF) au profit de l'unité de gestion (Sv) ou de l'utilisateur de maintenance (USAV), et une étape (EASv9) de réception d'une réponse à la demande d'autorisation de droit d'accès.

7. Procédé selon l'une des revendications 1 ou 2, comprenant en outre la réalisation d'une étape (EDSv2) de diagnostic local sur l'unité de gestion (Sv).

8. Procédé selon la revendication 7, dans lequel l'étape de fourniture d'un rapport de diagnostic comprend la réalisation d'une combinaison entre un résultat de l'étape de diagnostic local et le résultat de diagnostic en provenance de l'unité centrale de commande (U).

9. Procédé selon l'une des revendications 1 à 8, comprenant une étape (ERUSAV2) d'envoi d'un message d'escalade à un utilisateur de maintenance expert (USAVex).

10. Procédé selon l'une des revendications 1 à 9, comprenant :
- une étape (EDSv1') de réception d'une demande de commande concernant l'au moins une unité centrale de commande (U) appartenant à l'au moins une installation domotique (Su) ou l'au moins un dispositif domotique appartenant à l'au moins une installation domotique (Su) ;
- une étape (ERSv2') de test local sur la base des informations disponibles au niveau de l'unité de gestion (Sv) ;
- Une étape (ERSv3') d'envoi d'au moins un message de requête de commande à l'au moins une unité centrale de commande (U) concernée par la demande de commande ou à l'au moins une unité centrale de commande (U) à laquelle est rattachée l'au moins un dispositif domotique concerné par la demande de commande ;
- Une étape (ERSv8') de réception d'un résultat de commande en provenance d'une unité centrale de commande (U) ;
- Une étape (ERSv9') de fourniture d'un rapport de commande, en lien avec un ticket d'incident (Tk) à l'utilisateur de maintenance (USAV) établi sur la base de l'au moins un résultat de commande.

11. Procédé selon l'une des revendications 1 ou 2, comprenant en outre la réalisation d'une étape (ERSv2') de commande locale sur l'unité de gestion (Sv).

12. Procédé selon la revendication 10, dans lequel la commande correspond à la mise à jour d'un logiciel embarqué sur l'au moins un dispositif domotique (D) ou l'au moins une unité centrale de commande (U) concernée par la demande de commande.

13. Procédé selon l'une des revendications 1 à 11, comprenant :
- une étape (ERSv1") de détermination d'un système tiers (ST) associé à la gestion d'incident d'au moins une unité centrale de commande ou d'au moins un dispositif domotique concerné par la demande de gestion d'incident ;
- une étape (ERST2") d'envoi d'une requête d'ouverture d'un ticket tiers (TKST) par ledit système tiers (ST) ;

14. Procédé selon la revendication 13, comprenant en outre :
- Une étape (ERSv3") de réception d'un retour concernant le ticket tiers (TKST).

## Patentansprüche

1. Verfahren zur Störungsverwaltung in mindestens einer Heimautomatisierungsausrüstung, die mindestens eine Heimautomatisierungsvorrichtung (D) und mindestens eine zentrale Steuereinheit (U) umfasst, wobei das Verfahren von einer Verwaltungseinheit (Sv) durchgeführt wird, die aus der Ferne mit der mindestens einen Heimautomatisierungsausrüstung über ein Weitbereichsnetz verbunden ist, und die folgenden Schritte umfasst:
- einen Empfangsschritt (EDSv1) einer Diagnoseanfrage, die die mindestens eine zentrale Steuereinheit (U) betrifft, die zu der mindestens einen Heimautomatisierungsausrüstung (Su) oder der mindestens einen Heimautomatisierungsvorrichtung gehört, die zu der mindestens einen Heimautomatisierungsausrüstung (Su) gehört;
- einen Sendeschritt (EDSv3) mindestens einer Diagnoseanforderungsmeldung an die mindestens eine zentrale Steuereinheit (U), die von der Diagnoseanfrage betroffen ist, oder an die mindestens eine zentrale Steuereinheit (U), der die mindestens eine Heimautomatisierungsvorrichtung zugeordnet ist, die von der Diagnoseanfrage betroffen ist;
- einen Empfangsschritt (EDSv8) eines Diagnoseergebnisses, das von der mindestens einen zentralen Steuereinheit (U) kommt;
- einen Bereitstellungsschritt (EDSv9) eines Diagnoseberichts für einen Instandhaltungsbenutzer (USAV), der beauftragt ist, auf mindestens eine Anforderung eines Endbenutzers zu reagieren, wobei der Diagnosebericht auf der Basis des mindestens einen Diagnoseergebnisses erstellt wird;
wobei das mindestens ein Diagnoseergebnis umfasst:
- mindestens eine Information, die die Kommunikation zwischen der Verwaltungseinheit und der mindestens einen Heimautomatisierungsvorrichtung oder der mindestens einen zentralen Steuereinheit, die von der Diagnoseanfrage betroffen ist, betrifft,
und
- sofern die mindestens eine Heimautomatisierungsvorrichtung oder die mindestens eine zentrale Steuereinheit ein derartiges Ergebnis kommunizieren kann:
o mindestens einen bekannten Wert mindestens einer Zustandsvariablen der mindestens einen Heimautomatisierungsvorrichtung (D) und/oder der mindestens einen zentralen Steuereinheit (U); und/oder
o mindestens ein Ergebnis eines Steuerungs- oder eines Verbindungsversuchs auf Initiative des Endbenutzers (UsrF).

2. Verfahren nach Anspruch 1, umfassend einen vorherigen Empfangsschritt (EASv2) einer Störungsverwaltungsanfrage, die vom Endbenutzer (UsrF) der Ausrüstung (Su) oder vom Instandhaltungsbenutzer (USAV) kommt.

3. Verfahren nach einem der Ansprüche 1 oder 2, umfassend einen Schritt (EASv3) zur Bestimmung eines Benutzerprofils, das dem Endbenutzer (UsrF) entspricht.

4. Verfahren nach einem der Ansprüche 1 bis 3, umfassend einen Schritt (EAsv4) zur Bestimmung der Heimautomatisierungsausrüstung (Su) und/oder der mindestens einen Zentraleinheit (U) oder der mindestens einen Heimautomatisierungsvorrichtung (U), die mit dem Benutzerprofil verbunden sind, das dem Endbenutzer (UsrF) entspricht.

5. Verfahren nach einem der Ansprüche 1 bis 4, umfassend einen Verifizierungsschritt (EASv6) der Zugangsrechte des Instandhaltungsbenutzers (USAV) zu der mindestens einen Ausrüstung (Su), der mindestens einen Zentraleinheit (U) oder der mindestens einen Heimautomatisierungsvorrichtung (D).

6. Verfahren nach einem der Ansprüche 1 bis 5, umfassend einen Sendeschritt (EASv8) einer Genehmigungsanfrage temporärer Zugangsrechte zu der mindestens einen Ausrüstung (Su), zu der mindestens einen zentralen Steuereinheit (U) oder zu der mindestens einen Heimautomatisierungsvorrichtung (D) für den Endbenutzer (UsrF) zugunsten der Verwaltungseinheit (Sv) oder des Instandhaltungsbenutzers (USAV), und einen Empfangsschritt (EASv9) einer Antwort auf die Zugangsrechte-Genehmigungsanfrage.

7. Verfahren nach einem der Ansprüche 1 oder 2, umfassend ferner die Durchführung eines lokalen Diagnoseschritts (EDSv2) bei der Verwaltungseinheit (Sv).

8. Verfahren nach Anspruch 7, wobei der Bereitstellungsschritt eines Diagnoseberichts die Durchführung einer Kombination zwischen einem Ergebnis des lokalen Diagnoseschritts und dem Diagnoseergebnis umfasst, das von der zentralen Steuereinheit (U) kommt.

9. Verfahren nach einem der Ansprüche 1 bis 8, umfassend einen Sendeschritt (ERUSAV2) einer Eskalationsmeldung an einen Instandhaltungsbenutzerexperten (USAVex).

10. Verfahren nach einem der Ansprüche 1 bis 9, umfassend:
- einen Empfangsschritt (EDSv1') einer Steueranfrage, die die mindestens eine zentrale Steuereinheit (U) betrifft, die zu der mindestens einen Heimautomatisierungsausrüstung (Su) oder der mindestens einen Heimautomatisierungsvorrichtung gehört, die zu der mindestens einen Heimautomatisierungsausrüstung (Su) gehört;
- einen lokalen Testschritt (ERSv2') auf der Basis der Informationen, die im Bereich der Verwaltungseinheit (Sv) verfügbar sind;
- einen Sendeschritt (ERSv3') mindestens einer Steueranforderungsmeldung an die mindestens eine zentrale Steuereinheit (U), die von der Steueranfrage betroffen ist, oder an die mindestens eine zentrale Steuereinheit (U), der die mindestens eine Heimautomatisierungsvorrichtung zugeordnet ist, die von der Steueranfrage betroffen ist;
- einen Empfangsschritt (ERSv8') eines Steuerergebnisses, das von einer zentralen Steuereinheit (U) kommt;
- einen Bereitstellungsschritt (ERSv9') eines Steuerberichts in Verbindung mit einem Störungsticket (Tk) für den Instandhaltungsbenutzer (USAV), der auf der Basis des mindestens einen Steuerergebnisses erstellt wurde.

11. Verfahren nach einem der Ansprüche 1 oder 2, umfassend ferner die Durchführung eines lokalen Steuerschritt (ERSv2') auf der Verwaltungseinheit (Sv).

12. Verfahren nach Anspruch 10, wobei die Steuerung der Aktualisierung einer On-Board-Software der mindestens einen Heimautomatisierungsvorrichtung (D) oder der mindestens einen zentralen Steuereinheit (U) entspricht, die von der Steueranfrage betroffen ist.

13. Verfahren nach einem der Ansprüche 1 bis 11, umfassend:
- einen Schritt (ERSv1") zur Bestimmung eines Drittsystems (ST), das der Störungsverwaltung mindestens einer zentralen Steuereinheit oder mindestens einer Heimautomatisierungsvorrichtung zugeordnet ist, die von der Störungsverwaltungsanfrage betroffen ist;
- einen Sendeschritt (ERST2") einer Anforderung auf Eröffnung eines Dritttickets (TKST) durch das Drittsystem (ST);

14. Verfahren nach Anspruch 13, umfassend ferner:
- einen Empfangsschritt (ERSv3") einer Rückmeldung, die das Drittticket (TKST) betrifft.

## Claims

1. A method for managing incident in at least one home automation installation comprising at least one home automation device (D) and at least one central control unit (U), the method being implemented by a management unit (Sv) connected remotely to at least one home automation installation via an extended network, and comprising the following steps:
- A step (EDSv1) of receiving a diagnostic request concerning the at least one central control unit (U) belonging to the at least one home automation installation (Su) or the at least one home automation device belonging to the at least one home automation installation (Su);
- A step (EDSv3) of sending at least one message requesting diagnostic to the at least one central control unit (U) concerned by the diagnostic request or to the at least one central control unit (U) to which is attached the at least one home automation device concerned by the diagnostic request;
- A step (EDSv8) of receiving a diagnostic result from the at least one central control unit (U);
- A step (EDSv9) of providing a diagnostic report to a maintenance user (USAV) in charge of responding to at least one request from an end user, the diagnostic report being established on the basis of the at least one diagnostic result;
The at least one diagnostic result comprising:
- at least one information concerning the communication between the management unit and the at least one home automation device or the at least one central control unit concerned by the diagnostic request,
and
- insofar as the at least one home automation device or the at least one central control unit can communicate such a result:
∘ at least one known value of at least one state variable of the at least one home automation device (D) and/or of the at least one central control unit (U); and or
∘ at least one result of a control or connection attempt initiated by the end user (UsrF).

2. The method according to claim 1, comprising a prior step of receiving (EASv2) an incident management request from the end user (UsrF) of the installation (Su) or from the maintenance user (USAV).

3. The method according to any of claims 1 or 2, comprising a step (EASv3) of determining a user profile corresponding to the end user (UsrF).

4. The method according to any of claims 1 to 3, comprising a step (EAsv4) of determining the home automation installation (Su) and/or the at least one central unit (U) or the at least one home automation device (U) linked to the user profile corresponding to the end user (UsrF).

5. The method according to any of claims 1 to 4, comprising a step (EASv6) of checking the access rights of the maintenance user (USAV) on the at least one installation (Su), the at least one central unit (U) or the at least one home automation device (D).

6. The method according to any of claims 1 to 5, comprising a step (EASv8) of sending a temporary access right authorization request to the at least one installation (Su), to the at least one central control unit (U) or the at least one home automation device (D) to the end user (UsrF) for the benefit of the management unit (Sv) or the maintenance user (USAV), and a step (EASv9) of receiving a response to the access right authorization request.

7. The method according to any of claims 1 or 2, further comprising the performing of a local diagnostic step (EDSv2) on the management unit (Sv).

8. The method according to claim 7, wherein the step of providing a diagnostic report comprises the performing of a combination between a result of the local diagnostic step and the diagnostic result coming from the central control unit (U).

9. The method according to any of claims 1 to 8, comprising a step (ERUSAV2) of sending an escalation message to an expert maintenance user (USAVex).

10. The method according to any of claims 1 to 9, comprising:
- a step (EDSv1') of receiving a control request concerning the at least one central control unit (U) belonging to the at least one installation home automation (Su) or the at least one home automation device belonging to the at least one home automation installation (Su);
- a local test step (ERSv2') based on the information available at the level of the management unit (Sv);
- A step (ERSv3') of sending at least one control request message to the at least one central control unit (U) concerned by the control request or to the at least one central control unit (U) to which the at least one home automation device concerned by the control request is attached;
- A step (ERSv8') of receiving a control result from a central control unit (U);
- A step (ERSv9') of providing a control report, in connection with an incident ticket (Tk) to the maintenance user (USAV) established on the basis of the at least one control result.

11. The method according to any of claims 1 or 2, further comprising the performing of a local control step (ERSv2') on the management unit (Sv).

12. The method according to claim 10, wherein the control corresponds to the update of an on-board software on the at least one home automation device (D) or the at least one central control unit (U) concerned by the control request.

13. The method according to any of claims 1 to 11, comprising:
- a step (ERSv1") of determining a third-party system (ST) associated with the incident management of at least one central control unit or at least one home automation device concerned by the incident management request;
- a step (ERST2") of sending a request to open a third-party ticket (TKST) by said third-party system (ST);

14. The method according to claim 13, further comprising
- A step (ERSv3") of receiving feedback on the third-party ticket (TKST).
